(19) Europäisches Patentamt
European Patent Office
Office européen des brevets

(11) Veröffentlichungsnummer : **0 356 803 B1**

(12) # EUROPÄISCHE PATENTSCHRIFT

(45) Veröffentlichungstag der Patentschrift : **11.11.92 Patentblatt 92/46**

(51) Int. Cl.[5] : **C01G 37/14,** C01G 37/033, C22B 3/00

(21) Anmeldenummer : **89115031.0**

(22) Anmeldetag : **15.08.89**

(54) **Verfahren zur Herstellung eines Elektrolyten zur Erzeugung von Alkalidichromaten und Chromsäure.**

(30) Priorität : **27.08.88 DE 3829120**

(43) Veröffentlichungstag der Anmeldung : **07.03.90 Patentblatt 90/10**

(45) Bekanntmachung des Hinweises auf die Patenterteilung : **11.11.92 Patentblatt 92/46**

(84) Benannte Vertragsstaaten : **DE ES FR GB IT**

(56) Entgegenhaltungen :
**EP-A- 0 278 411**
**US-A- 4 002 564**
**US-A- 4 157 298**
**CHEMICAL ABSTRACTS, Band 97, Nr. 4, 1982, Seite 116, Zusammenfassung Nr. 25786b, Columbus, Ohio, US; Y. SEKINE et al.:"Advanced purification of salt solution by using chelate resins".**
**CHEMICAL ABSTRACTS, Band 88, Nr. 24, 12. Juni 1978, Seite 169, Zusammenfassung Nr. 172992h, Columbus, Ohio, US.**

(73) Patentinhaber : **BAYER AG**
**W-5090 Leverkusen 1 Bayerwerk (DE)**

(72) Erfinder : **Klotz, Helmut, Dr.**
**Pappelweg 1**
**W-5060 Bergisch-Gladbach 2 (DE)**
Erfinder : **Weber, Rainer, Dr.**
**Heymannstrasse 36**
**W-5090 Leverkusen 1 (DE)**
Erfinder : **Block, Hans-Dieter, Dr.**
**Biesenbach 49**
**W-5090 Leverkusen 1 (DE)**
Erfinder : **Klipper, Reinhold, Dr.**
**Roonstrasse 9**
**W-5000 Köln 50 (DE)**
Erfinder : **Hoffmann, Heiko,**
**Heitberg 6**
**W-5060 Bergisch-Gladbach 1 (DE)**
Erfinder : **Lönhoff, Norbert, Dr.**
**Paul-Klee-Strasse 60**
**W-5090 Leverkusen 1 (DE)**

EP 0 356 803 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Entfernung mehrwertiger Kationen aus Monochromatlösungen, die nach diesem Verfahren erhältlichen Monochromatlösungen und die Verwendung dieser Lösungen als Elektrolyt zur elektrochemischen Herstellung von Dichromaten und Chromsäure ($CrO_3$).

Gemäß US-A 3 305 463 und CA-A 739 447 erfolgt die elektrolytische Herstellung von Dichromaten und Chromsäure in Elektrolysezellen, deren Elektrodenräume durch Kationenaustauschermembranen getrennt sind. Bei der Erzeugung von Alkalidichromaten werden Alkalimonochromatlösungen oder -Suspensionen in den Anodenraum der Zelle eingeleitet und in eine Alkalidichromatlösung umgewandelt, indem Alkaliionen selektiv durch die Membran in den Kathodenraum überführt werden. Zur Herstellung von Chromsäure werden Alkalidichromat oder Alkalimonochromat oder eine Mischung von Alkalidichromat und -monochromat in den Anodenraum eingeleitet und in Chromsäure-haltige Lösungen überführt. In der Regel kommen für diese Prozesse Natriumdichromat und/oder Natriummonochromat zum Einsatz. Im Kathodenraum wird bei beiden Prozessen eine alkalische Alkaliionen-haltige Lösung erhalten, die beispielsweise aus einer wäßrigen Natriumhydroxid-Lösung oder, wie in der CA-A-739 447 beschrieben, aus einer wäßrigen Natriumcarbonat-haltigen Lösung bestehen kann.

Bei Durchführung dieser Verfahren kommt es zur Bildung von Einlagerungen von Verbindungen mehrwertiger Ionen, insbesondere Erdalkaliionen, in der Membran, die deren Funktionsfähigkeit bereits nach kurzer Zeit verschlechtert, bis hin zum völligen Ausfall der Membran. Ursache dieser Einlagerungen sind geringe Gehalte an mehrwertigen Kationen, insbesondere Calcium- und Strontiumionen, in den als Elektrolyt verwendeten Alkalimonochromat- oder Alkalidichromatlösungen, wie sie in technischen Verfahren, beschrieben in Ullmann's Encyclopedia of Industrial Chemistry, 5th Edition, Volume A7, 1986, S. 67-97, erhältlich sind.

Nach der EP-A 47 799 können Calciumionen aus Alkalimonochromatlösungen durch Fällung als Calciumcarbonat und Filtration entfernt werden. Gemäß Beispiel 13 dieser Patentanmeldung wird dabei eine Monochromatlösung erhalten, die 4 ppm Calcium enthält. Ein solcher Gehalt an Calciumionen ist für einen dauerhaften Betrieb einer Kationenaustauschermembran zu hoch.

Die Aufgabe der Erfindung bestand darin, Elektrolyten für die elektrochemische Herstellung von Alkalidichromaten und Chromsäure bereitzustellen, die einen kontinuierlichen und dauerhaften Betrieb der Elektrolyse erlauben.

Weitere Vorschläge der Anmelderin auf dem Gebiet der elektrolytischen herstellung von Alkalidichromat und Chromsäure sind in den EP-A 356 802, EP-A 356, 804, EP-A 356 805, EP-A 356 806 und EP-A 356 807 zu finden.

Es wurde nun überraschend gefunden, daß mehrwertige Kationen aus Alkalimonochromatlösungen mit Perlpolymeren auf Basis von vernetztem Polystrol mit chelatisierenden Gruppen selektiv und nahezu vollständig entfernt werden können, wobei die chelatisierenden Gruppen Substituenten aus der Reihe

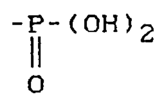 , 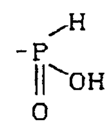 ,

$-CH_2-N(CH_2COOH)_2$; ,

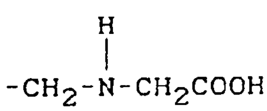 ; 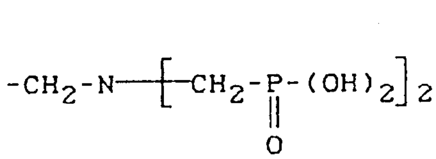 ;

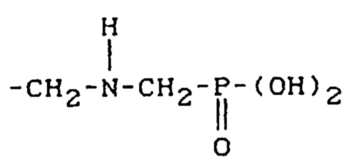

sind.

Solche als Kationenaustauscher wirkende Perlpolymere sind beispielsweise in Ullmanns Encyklopädie der technischen Chemie, 4. Auflage, Band 13, 1977, S. 295-297 beschrieben.

Gegenstand der Erfindung ist somit ein Verfahren zur Entfernung mehrwertiger Kationen aus Monochromatlösungen, welches dadurch gekennzeichnet ist, daß die mehrwertigen Kationen mit Perlpolymeren auf Basis von vernetztem Polystyrol mit chelatisierenden Gruppen entfernt werden, wobei die chelatisierenden Gruppen Substituenten aus der Reihe

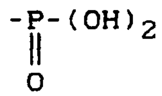 , 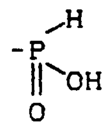 ,

$-CH_2-N(CH_2COOH)_2$;,

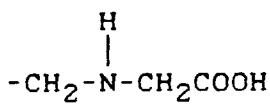 ; 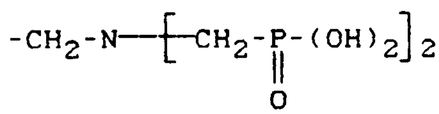 ;

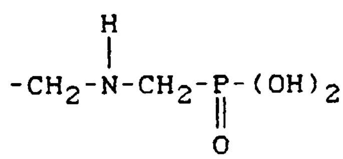

sind.

Die H-Atome der sauren Gruppen in den genannten Substituenten können auch durch Alkaliionen, insbesondere Natrium, ganz oder teilweise ersetzt sein.

Die Entfernung der mehrwertigen Kationen erfolgt nach den in der Technik bekannten Verfahren, beispielsweise in Ionenaustauschsäulen. Es ist vorteilhaft, die Temperatur der Monochromatlösungen unter 90°C einzustellen, um eine oxidative Schädigung der Perlpolymere zu vermeiden bzw. zu minimieren.

Das erfindungsgemäße Verfahren kann auf Lösungen mit unterschiedlichen Gehalten an Alkalimonochromat angewendet werden, wobei der Gehalt an Alkalimonochromat von 1 g/l bis 960 g/l betragen kann.

Vorzugsweise werden beim erfindungsgemäßen Verfahren Perlpolymere eingesetzt, in denen die chelatisierenden Gruppen die Substituenten

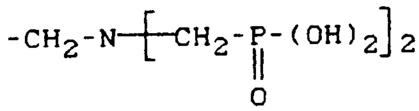 und 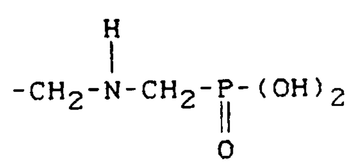

sind, wobei das vernetzte Polystyrol mit jeweils einer der beiden Substituenten oder mit einem Gemisch beider Substituenten substituiert sind. Solche Perlpolymere sind im Handel unter der Bezeichnung Duolite® ES 467, DOW Chemical, USA erhältlich.

Besonders bevorzugt sind dabei im Fall des gemischtsubstituierten vernetzten Polystyrols die Perlpolymeren, in denen das molare Verhältnis der P-Atome zu den N-Atomen 1:1 bis 1,8:1 beträgt.

Es ist vorteilhaft, solche Perlpolymere einzusetzen, bei denen die H-Ionen der Säuregruppen in den Substituenten teilweise oder vollständig durch Natriumionen ersetzt sind.

Die erfindungsgemäßen Perlpolymere können sowohl in der Gel-Form als auch in der makroporösen Form eingesetzt werden, wobei die makroporöse Form bevorzugt ist.

Es hat sich als vorteilhaft erwiesen, das Perlpolymer in monodisperser Form einzusetzen.

In einer besonders vorteilhaften Variante des erfindungsgemäßen Verfahrens wird eine Alkalimonochromatlösung mit einem Gehalt von 100-600 g/l Alkalimonochromat eingesetzt, die durch Fällung mit Carbonaten von der Hauptmenge der Erdalkalionen befreit wurde, wobei die Fällung bei 50-100°C, bei einem pH-Wert von 9 bis 12 und mit einem 2- bis 10-fachen Carbonatüberschuß, bezogen auf die Menge an Erdalkalionen, durchgeführt wird.

Bei der Durchführung des erfindungsgemäßen Verfahrens werden Monochromatlösungen erhalten, deren Gehalt an mehrwertigen Kationen, wie Calcium-, Magnesium-, Strontium-, Barium- und Eisenionen unter 1 ppm liegen, wobei dieser Wert teils deutlich unterschritten wird. Solche Lösungen sind hervorragend als Elektrolyt zur elektrochemischen Herstellung von Dichromaten und Chromsäure geeignet. Aufgrund der sehr geringen Gehalte an mehrwertigen Kationen wird die Lebensdauer der Membran erheblich verlängert, was einen dauerhaften, kontinuierlichen Betrieb der Elektrolyse gewährleistet.

Zudem sind nach dem erfindungsgemäßen Verfahren hochreine Chromate, Dichromate und Chromsäure erhältlich, die beispielsweise in der Analytik, in der elektrolytischen Gewinnung von hochreinem Chrommetall und in der Herstellung von hochreinen Pigmenten einsetzbar sind.

Die erfindungsgemäß von mehrwertigen Kationen zu befreienden Lösungen können selbstverständlich neben Monochromationen auch andere Anionen, wie beispielsweise $OH^-$, $CO_3^{2-}$, $HCO_3^-$, $Cr_2O_7^{2-}$ u.a. enthalten, ohne daß das Verfahren beeinträchtigt wird.

Nach erfolgter Beladung der Kationenaustauscher mit mehrwertigen Kationen können diese in bekannter Weise mit Säuren, vorzugsweise Salzsäure, und gegebenenfalls mit anschließendem Austausch der H-Ionen der Säuregruppen gegen Natriumionen mittels Natronlauge regeneriert werden.

Die erfindungsgemäß einzusetzenden Perlpolymere zeichnen sich durch eine hohe Aufnahmefähigkeit für mehrwertige Kationen - insbesondere Calciumionen - und durch eine gute mechanische und osmotische Stabilität in Alkalimonochromatlösungen aus.

Das erfindungsgemäße Verfahren wird anhand der folgenden Beispiele näher erläutert.

In den Beispielen wurden Natriummonochromatlösungen verwendet, wie sie in einem typischen Produktionsprozeß, beschrieben in Ullmann's Encyclopedia of Industrial Chemistry, 5th Edition, Volumen A7, 1986, S. 67-97, erhältlich sind. Die bei den Beispielen 3 bis 5 eingesetzten Natriummonochromatlösungen wurden zuvor durch Fällung mit in situ erzeugtem Natriumcarbonat von der Hauptmenge der Erdalkalionen befreit.

In den einzelnen Beispielen wurden als Kationenaustauscher folgende Perlpolymere eingesetzt:

<u>Perlpolymer A</u>

Makroporöses Perlpolymer auf Basis von mit Divinylbenzol vernetztem Polystyrol, bei dem die Styrolkerne durch

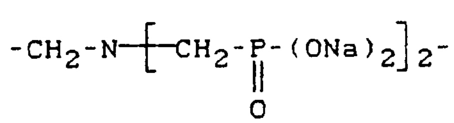

Gruppen und

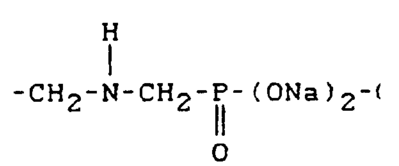

Gruppen substituiert sind, wobei das molare Verhältnis der P-Atome zu den N-Atomen ca. 1,6 zu 1,0 beträgt.

Ein solches Perlpolymer ist beispielsweise in der Zeitschrift Chemia Anal: Tyczna, Band 18, S. 1019 f.,

1973 beschrieben.

Perlpolymer B

Makroporöses Perlpolymer auf Basis von mit Divinylbenzol vernetztem Polystyrol, bei dem die Styrolkerne durch

$$-CH_2-N(CH_2COONa)_2-$$

Gruppen und

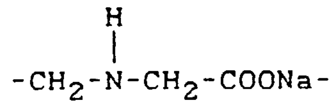

Gruppen substituiert sind.

Handelsname: Lewatit® TP 207, BAYER AG, Leverkusen

Perlpolymer C

Makroporöses Perlpolymer auf Basis von mit Divinylbenzol vernetztem Polystyrol, bei dem die Styrolkerne durch $-SO_3Na$-Gruppen substituiert sind.

Handelsname: Lewatit® SP 112, BAYER AG, Leverkusen

Beispiel 1

Die bei diesem Versuch eingesetzte 34 %ige Natriummonochromatlösung (462 g/l $Na_2CrO_4$) wies folgende Gehalte an mehrwertigen Kationen auf:

Calcium: 10,3 ppm
Magnesium: 0,4 ppm
Strontium: 5,1 ppm

Ein Liter dieser Lösung wurde mit 300 ml Perlpolymer A 27 Stunden bei 89°C gerührt. Der pH-Wert dieser Lösung betrug 11,5. Nach Versuchsende waren die Gehalte der genannten Kationen auf folgende Werte zurückgegangen:

Calcium: < 0,4 ppm
Magnesium: < 0,05 ppm
Strontium: 0,7 ppm

Eine Untersuchung des Perlpolymeres nach dem Versuch ergab, daß das Polymergerüst intakt geblieben war. Darüberhinaus zeigten die Elementaranalysen, daß kein merklicher Abbau der Aminomethylphosphonsäuregruppen stattgefunden hatte. Das Perlpolymer ist demnach zur Entfernung von mehrwertigen Kationen aus Natriummonchromatlösungen geeignet.

Beispiel 2

350 ml Perlpolymer A werden in eine beheizbare Glassäule mit einem Durchmesser von 3 cm gefüllt, was eine Füllhöhe von ca. 50 cm ergab. Über diese Säule wurde eine 25,5 %ige Natriummonochromatlösung (318 g/l $Na_2CrO_4$) mit nachfolgenden Gehalten an mehrwertigen Kationen geleitet.

Calcium: 2,7 ppm
Magnesium: < 0,5 ppm
Strontium: 16,8 ppm
Eisen: 0,09 ppm

Die Beschickung der Säule erfolgte von unten nach oben mit einer Durchlaufgeschwindigkeit von 2,25 l pro Stunde und bei einer Temperatur von 88°C.

Bei dem Versuch stellten sich im Eluat der Säule folgende Gehalte an mehrwertigen Kationen ein:

| Nach Durchlauf von | ppm Mg | ppm Ca | ppm Sr | ppm Fe |
|---|---|---|---|---|
| 0,1 l | < 0,4 | < 0,4 | < 0,4 | 0,05 |
| 0,7 l | < 0,4 | < 0,4 | < 0,4 | 0,02 |
| 1,5 l | < 0,4 | < 0,4 | < 0,4 | 0,03 |
| 2,25 l | < 0,4 | < 0,4 | < 0,4 | 0,03 |
| 3,0 l | < 0,4 | < 0,4 | < 0,4 | 0,03 |

Beispiele 3 bis 5

Für die folgenden Versuche (Beispiel 3 bis 5) wurden zwei Natriummonochromatlösungen eingesetzt, die nach folgendem Verfahren vorbehandelt wurden:

Jeweils 350 l einer 35,15 %igen Natriummonochromatlösung (483 g/l $Na_2CrO_4$) mit

393 ppm Calcium
11 ppm Strontium
1,5 ppm Barium
1 ppm Magnesium

wurden bei 80°C unter Rühren portionsweise mit 8,44 kg 45 %iger Natronlauge und 14 kg Kohlendioxid versetzt. Die Zugabe der Natronlauge und des Kohlendioxids wurde dabei so gewählt, daß die Lösung immer einen pH-Wert von ca. 10 aufwies, wobei die Zugabezeit 2 Stunden betrug. Während dieser Zeit wurden in situ insgesamt 5 kg Natriumcarbonat gebildet, was einem 10-fachen molaren Überschuß bezogen auf die Menge an Erdalkaliionen der Natriummonochromatlösung entspricht.

Nach beendeter Zugabe von Natronlauge und Kohlendioxid wurde noch eine Stunde bei 80°C gerührt und anschließend filtriert. Die klaren Filtrate wiesen nach dieser Carbonatfällung folgende Gehalte an mehrwertigen Kationen auf:

| | Fällung 1 | Fällung 2 |
|---|---|---|
| Calcium : | 1,8 ppm | 2,5 ppm |
| Strontium : | 1 ppm | 1 ppm |
| Barium : | < 0,4 ppm | < 0,4 ppm |
| Magnesium : | < 0,4 ppm | < 0,4 ppm |

Beispiel 3

In diesem Versuch wurde das Filtrat der Fällung 1 und das Perlpolymer A eingesetzt. 350 ml Perlpolymer A wurden in eine beheizbare Glassäule mit einem Durchmesser von 3 cm gefüllt, was eine Füllhöhe con ca. 50 cm ergab. Über diese Säule wurde die Natriummonochromatlösung mit einer Geschwindigkeit von 10,6 l pro Stunde geleitet. Die Beschickung der Säule erfolgt von unten nach oben bei einer Temperatur von 80°C.

Im Eluat der Säule stellten sich dabei folgende Gehalte an mehrwertigen Kationen ein:

| Nach Durchlauf von | ppm Ca | ppm Sr |
|---|---|---|
| 10 l | < 0,4 | < 0,4 |
| 20 l | < 0,4 | < 0,4 |
| 30 l | < 0,4 | < 0,4 |
| 95 l | < 0,4 | 0,6 |
| 138 l | 0,4 | 0,7 |
| 180 l | 0,4 | 0,9 |
| 212 l | 0,4 | 0,9 |

Biespiel 4

350 ml Perlpolymer B wurden in eine beheizbare Glassäule mit einem Durchmesser von 3 cm gefüllt, was eine Füllhöhe von ca. 50 cm ergab. Über diese Säule wurde das Filtrat der Fällung 2 bei 80°C mit einer Geschwindigkeit von 2,25 l pro Stunde geleitet. Die Beschickung erfolgte von unten nach oben.

Im Eluat der Säule stellten sich dabei folgende Gehalte an mehrwertigen Kationen ein:

| Nach Durchlauf von | ppm Ca | ppm Sr |
|---|---|---|
| 2,25 l | < 0,4 | < 0,4 |
| 4,5 l | < 0,4 | < 0,4 |
| 6,75 l | < 0,4 | < 0,4 |
| 9,0 l | < 0,4 | < 0,4 |
| 11,25 l | < 0,4 | < 0,4 |

Beispiel 5

In diesem Versuch wurde das Perlpolymer C eingesetzt. Die sonstigen Versuchsparameter waren die gleichen wie im Beispiel 4.

Im Eluat der Säule stellten sich folgende Gehalte an mehrwertigen Kationen ein:

| Nach Durchlauf von | ppm Ca | ppm Sr |
|---|---|---|
| 2,25 l | 2 | 1 |
| 4,50 l | 2 | 1 |
| 6,75 l | 2 | 1 |
| 9,00 l | 2 | 1 |
| 11,25 l | 2 | 1 |

In diesem Versuch ergab sich nur eine geringfügige Abnahme der Calciumgehalte der Lösung.

**Patentansprüche**

1. Verfahren zur Entfernung mehrwertiger Kationen aus Monochromatlösungen, dadurch gekennzeichnet, daß die mehrwertigen Kationen mit Perlpolymeren auf Basis von vernetztem Polystyrol mit chelatisierenden Gruppen entfernt werden, wobei die chelatisierenden Gruppen Substituenten aus der Reihe

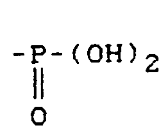 , 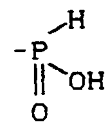 ,

$-CH_2-N(CH_2COOH)_2$; ,

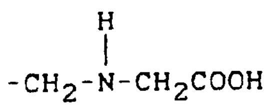 ; 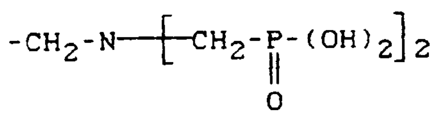 ;

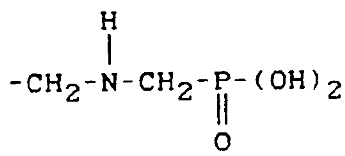

sind.

2. Verfahren nach Anspruch 1, dadurch gekennzeichnet, daß die chelatisierenden Gruppen die Substituenten

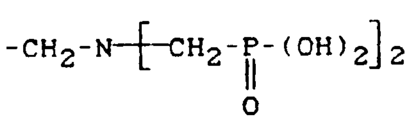 und 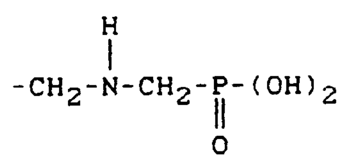

sind,
wobei das vernetzte Polystyrol mit jeweils einer der beiden Substituenten oder mit einem Gemisch beider Substituenten substituiert sind.

3. Verfahren nach Anspruch 2, dadurch gekennzeichnet, daß im Fall des gemischtsubstituierten vernetzten Polystyrols das molare Verhältnis der P-Atome zu den N-Atomen im Perlpolymeren 1:1 bis 1,8:1 beträgt.

4. Verfahren nach Anspruch 1, 2 und 3, dadurch gekennzeichnet, daß die H-Ionen der Säuregruppen in den Substituenten teilweise oder vollständig durch Natriumionen ersetzt sind.

5. Verfahren nach den Ansprüchen 1 bis 4, dadurch gekennzeichnet, daß makroporöse Perlpolymere eingesetzt werden.

6. Verfahren nach einem oder mehrerer der Ansprüche 1 bis 5, dadurch gekennzeichnet, daß eine Alkalimonochromatlösung mit einem Gehalt von 100-600 g/l Alkalimonochromat eingesetzt wird, die durch Fällung mit Carbonaten von der Hauptmenge der Erdalkalionen befreit wurde, wobei die Fällung bei 50-100°C, bei einem pH-Wert von 9 bis 12 und mit einem 2- bis 10-fachen Carbonatüberschuß, bezogen auf

die Menge an Erdalkaliionen, durchgeführt wird.

## Claims

1. A process for removing multivalent cations from monochromate solutions, characterized in that the multivalent cations are removed with bead polymers based on cross-linked polystyrene with chelating groups, the chelating groups being substituents from the range

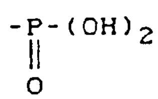 , 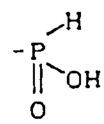 ,

$-CH_2-N(CH_2COOH)_2$;

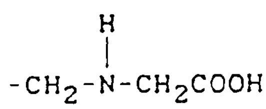 ; 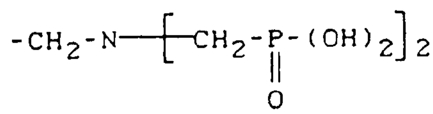

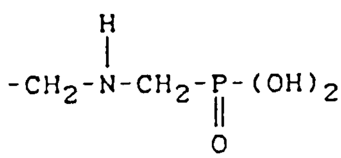

2. A process according to Claim 1, characterized in that the chelating groups are the substituents

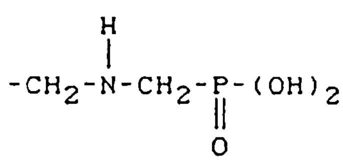 and 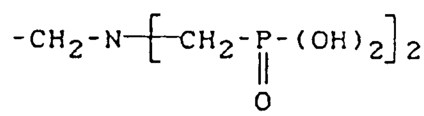

the cross-linked polystyrene being substituted with one of the two substituents or with a mixture of both substituents.

3. A process according to Claim 2, characterized in that in the case of the mixed substituted cross-linked polystyrene, the molar ratio of the P atoms to the N atoms in the bead polymers is 1:1 to 1.8:1.

4. A process according to Claims 1, 2 and 3, characterized in that the H ions of the acid groups in the substituents are partly or completely replaced by sodium ions.

5. A process according to Claims 1 to 4, characterized in that macroporous bead polymers are used.

6. A process according to one or several of Claims 1 to 5, characterized in that an alkali monochromate solution with a monochromate content of 100-600 g/l is used, from which the bulk of the alkaline earth cations has been removed by precipitation with carbonates, the precipitation being carried out at 50-100 °C, at a pH value of 9 to 12 and with a 2- to 10-fold excess of carbonate, relative to the quantity of alkaline earth

ions.

## Revendications

1. Procédé pour l'élimination de cations polyvalents de solutions de monochromates, caractérisé en ce que les cations polyvalents sont éliminés par des polymères en perles à base de polystyrène réticulé portant des groupes chélatants qui sont des substituants de la série

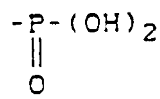 , 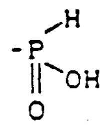 ,

$-CH_2-N(CH_2COOH)_2$;

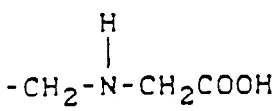 ; 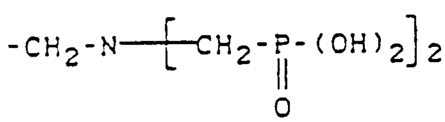 ;

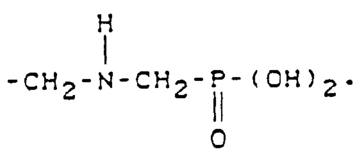

2. Procédé selon la revendication 1, caractérisé en ce que les groupes chélatants sont les groupes

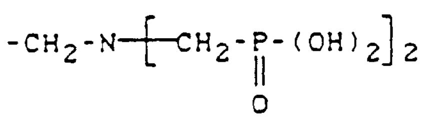 et 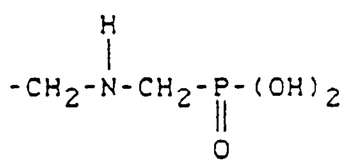

le polystyrène réticulé étant chaque fois substitué par l'un des deux substituants ou par un mélange des deux substituants.

3. Procédé selon la revendication 2, caractérisé en ce que, dans le cas du polystyrène réticulé à substituants mixtes, le rapport molaire des atomes P aux atomes N dans le polymère en perles est de 1:1 à 1,8:1.

4. Procédé selon les revendications 1, 2 et 3, caractérisé en ce que les ions H des groupes acides dans les substituants sont partiellement ou totalement remplacés par des ions sodium.

5. Procédé selon les revendications 1 à 4, caractérisé en ce que l'on utilise des polymères en perles macroporeux.

6. Procédé selon une ou plusieurs des revendications 1 à 5, caractérisé en ce que l'on utilise une solution de monochromate alcalin d'une teneur de 100-600 g/l de monochromate alcalin, qui a été débarrassée

de la majeure partie des ions alcalino-terreux par précipitation par des carbonates, la précipitation étant mise en oeuvre à 50-100°C avec un pH de 9 à 12 et un excès de carbonate de 2 à 10 fois, par rapport à la quantité d'ions alcalino-terreux.